# EUROPEAN PATENT APPLICATION

(11) **EP 1 630 632 A1**
(43) Date of publication of application: **01.03.2006**
(21) Application number: 04745542.3
(22) Date of filing: 03.06.2004
(51) Int. Cl.: G05B 19/18

(54) **NUMERICAL CONTROL DEVICE FOR MACHINE TOOL AND NUMERICAL CONTROL METHOD FOR MACHINE TOOL**

(30) Priority: 04.06.2003 JP 2003159306
(71) Applicant: STAR MICRONICS CO., LTD., Shizuoka-shi, Shizuoka 422-8654 (JP)
(72) Inventor: INOUE, Yukihiro, c/o STAR MICRONICS CO., LTD., Shizuoka-shi, Shizuoka 4228654 (JP); SUGIYAMA, Tetsuya, c/o STAR MICRONICS CO., LTD., Shizuoka-shi, Shizuoka 4228654 (JP); TAKESHITA, Akihide, c/o STAR MICRONICS CO., LTD., Shizuoka-shi, Shizuoka 4228654 (JP); YAZAKI, Noriyuki, c/o STAR MICRONICS CO., LTD., Shizuoka-shi, Shizuoka 4228654 (JP)
(74) Representative: Skone James, Robert Edmund
(86) International application number: PCT/JP2004/007686
(87) International publication number: WO 2004/109412

(57) **Abstract**

To provide a numerical control apparatus of a machine tool and a numerical control method of a machine tool capable of increasing a conversion ratio of the case of converting an NC program into an electronic cam program and improving working efficiency by eliminating the need to cut off electronic cam data before and after an S code or an M code.
[Means for Resolution]
An apparatus comprising electronic cam control means, reference shaft operation control means for controlling an operation of a reference shaft in the case of executing the electronic cam control means, a data table for command processing execution configured so as to describe a command equivalent to an S code or an M code to be executed in correspondence with the reference shaft in order to execute a function equivalent to an S code or an M code in synchronization with the reference shaft operated by control through the reference shaft operation control means, and command table control means for performing command processing control based on the reference shaft and the data table for command processing execution.

## Description

### Technical Field

The present invention relates to a numerical control apparatus of a machine tool and a method for numerically controlling a machine tool, and particularly to a numerical control apparatus and method devised so that time necessary for machining is reduced by eliminating the need to cut off electronic cam data before and after an S code or an M code and a conversion ratio of the case of converting an NC program into an electronic cam program is increased and thereby working efficiency can be improved.

### Background Art

For example, a numerical control machine tool in which when a raw material is set in a machine tool and is machined in a desired shape using a tool such as a turning tool, a numerical control program (NC program) is created and each part including the tool such as the turning tool is automatically operated by the NC program and thereby a machined part with the desired shape is obtained has been known generally.

The NC program itself created in order to obtain the machined part as described above can normally be created and corrected on the numerical control machine tool and, for example, when the machined part has trouble in which, for example, it is not within drawing tolerances as a result of trying shaving the machined part, correction for eliminating its trouble can be made on the machine tool and high working efficiency can be provided.

On the other hand, using an electronic cam program rather than the NC program, a raw material set in a machine tool is machined in a desired shape using a tool such as a turning tool. Control using the electronic cam program herein refers to control as disclosed in, for example, Patent Reference 1.

Patent Reference 1: JP-A-2001-170843

That is, as disclosed in Patent Reference 1, by pulse signals outputted by a pulse encoder attached to a reference shaft, momentary command data of a movement shaft is generated from momentary rotation position data and command position data of the movement shaft respectively set and corresponding every unit rotation position of the reference shaft. From this movement command data and the rotation position data, command speed data of the movement shaft in synchronization with a rotation speed of a rotating body is generated and a position of a tool is controlled based on the movement command data and the command speed data generated. Then, in a numerical control machine tool using this kind of electronic cam program, each of the position data of a workpiece or a tool with respect to an accumulated rotation angle of a main shaft is defined and therefore, there are advantages capable of performing machining with higher accuracy in a shorter time as compared with the numerical control machine tool using the NC program.

Also, this kind of electronic cam program is normally created by inputting drawing information, a specified machining path, a machining process, tool information, tooling information, etc. to CAM software etc. installed on a personal computer etc. disposed separately from the numerical control machine tool, but it is contemplated to convert the NC program into the electronic cam program using a certain kind of conversion software.

### Disclosure of the Invention

### Problems that the Invention is to Solve

There were the following problems according to the conventional configuration described above.
That is, with respect to shaft control, this can be controlled and executed by an electronic cam, but with respect to a command to an auxiliary machine corresponding to the so-called "M code" or "S code", etc., this could not be performed by electronic cam control. Therefore, this was conventionally performed by NC control. As a result of that, in the case of producing an output of the "M code" or the "S code" when one machining stroke is performed by the electronic cam control, it was necessary to produce the output after once switching from the electronic cam control to the NC control and thereafter, it was necessary to return to the electronic cam control.
In this method, it is necessary to once stop movement of a control shaft at the time of switching of control even for a command which does not have a direct influence on machining, and waste time occurs. Also, even though time necessary for switching of control is so short that the time can be ignored, the number of switchings increases and thereby the accumulated time becomes unignorable time and it was not preferable from the standpoint of reducing the machining time.
Also, with respect to an auxiliary machine command corresponding to the "M code" or the "S code", etc., a situation in which this cannot be performed by the electronic cam control results in the presence of many NC programs incapable of being converted into the electronic cam programs and as a result, there was a problem that effect of a sufficient improvement in machining efficiency cannot be obtained.

The invention has been implemented based on such points, and an object of the invention is to provide a numerical control apparatus of a machine tool and a numerical control method of a machine tool capable of achieving reduction in machining time by eliminating a situation in which electronic cam data is cut off before and after an "M code" or an "S code" and increasing a conversion ratio of the case of converting an NC program into an electronic cam program and improving working efficiency.

### Means for Solving the Problems

In order to attain the object, a numerical control apparatus of a machine tool according to claim 1 of the invention of the present application is characterized in that in a numerical control apparatus of a machine tool for holding a workpiece in a main shaft and also moving at least one of the workpiece and a tool by which the workpiece is machined and machining the workpiece in a desired shape, the apparatus comprises electronic cam control means for controlling a control shaft by an electronic cam, reference shaft operation control means for controlling an operation of a reference shaft in the case of executing the electronic cam control means, a data table for command processing execution configured so as to describe a command equivalent to an S code or an M code to be executed in correspondence with the reference shaft in order to execute a function equivalent to an S code or an M code in synchronization with the reference shaft operated by control through the reference shaft operation control means, and command table control means for performing command processing control based on the reference shaft and the data table for command processing execution.
Also, a numerical control apparatus of a machine tool according to claim 2 is characterized in that in a numerical control apparatus of a machine tool according to claim 1, the apparatus comprises time division processing means configured so that time division processing of processing executed by the electronic cam control means and processing executed by the command table control means is respectively performed in a common CPU.
Also, a numerical control apparatus of a machine tool according to claim 3 is characterized in that in a numerical control apparatus of a machine tool according to claim 1, the apparatus comprises previous activation means for previously activating the electronic cam control means and the command table control means, and the reference shaft operation control means is means for performing control so as to start an operation of a reference shaft after both of the electronic cam control means and the command table control means are previously activated by the previous activation means.
Also, a numerical control method of a machine tool according to claim 4 comprises a step of determining whether or not a block read by starting processing is an electronic cam activation command, and a step of executing electronic cam activation processing in the case of determining that the block is the electronic cam activation command by the step, and is characterized in that the step of executing the electronic cam activation processing comprises a step of performing activation processing of a shaft control part and a step of performing activation processing of a command processing part.
Also, a numerical control method of a machine tool according to claim 5 is characterized in that in a numerical control method of a machine tool according to claim 4, the step of executing the electronic cam activation processing executes a step of moving a reference shaft after a step of performing activation processing of a shaft control part and a step of performing activation processing of a command processing part are ended.

In other words, a numerical control apparatus of a machine tool according to the invention of the present application is configured so that a control shaft is controlled by electronic cam control means and in addition, processing in which an S code command or an M code command is to be executed by reference shaft operation control means, a data table for command processing execution and command table control means can also be executed by electronic cam control, so that the number of switchings between NC control and electronic cam control is significantly decreased and thereby, time necessary for machining can be reduced.
Also, a ratio of conversion from an NC program into an electronic cam program is increased and thereby machining efficiency can be improved.
Also, electronic cam control and command processing control are executed based on a common reference shaft, so that both the controls are executed in synchronization and a deviation of timing of command processing, interference between respective operations based on both the controls, etc. can be prevented effectively.
In that case, it is contemplated to be configured so that time division processing of processing executed by the electronic cam control means and processing executed by the command table control means is respectively performed in a common CPU and as a result of that, it becomes unnecessary to examine a correlation with data used in another table data in the case of creating table data, so that creation of the table data is facilitated.
Also, it is contemplated to dispose previous activation means for previously activating the electronic cam control means and the command table control means and be configured so that the reference shaft operation control means starts an operation of a reference shaft after both of the electronic cam control means and the command table control means are previously activated by the previous activation means, and in that case, the command table control means and the electronic cam control means can be operated in synchronization with the reference shaft without delay.
Also, the claims 4 and 5 are claimed as a numerical control method of a machine tool.

### Effect of the Invention

In accordance with a numerical control apparatus of a machine tool and a numerical control method of a machine tool according to the invention, it is configured so that a control shaft is controlled by electronic cam control means and in addition, processing in which an S code command or an M code command is to be executed by reference shaft operation control means, a data table for command processing execution and command table control means can also be executed by electronic cam control, so that the number of switchings between NC control and electronic cam control is significantly decreased and thereby, time necessary for machining can be reduced.
Also, a ratio of conversion from an NC program into an electronic cam program is increased and thereby machining efficiency can be improved.
Also, electronic cam control and command processing control are executed based on a common reference shaft, so that both the controls are executed in synchronization and a deviation of timing of command processing, interference between respective operations based on both the controls, etc. can be prevented effectively.
Also, in the case of being configured so that time division processing of processing executed by the electronic cam control means and processing executed by the command table control means is respectively performed in a common CPU, it becomes unnecessary to examine a correlation with data used in another table data in the case of creating table data, so that creation of the table data is facilitated and also, a situation in which electronic cam control becomes unstable due to the influence of command processing can be prevented.
Also, in the case of being configured so that previous activation means for previously activating the electronic cam control means and the command table control means is disposed and the reference shaft operation control means starts an operation of a reference shaft after both of the electronic cam control means and the command table control means are previously activated by the previous activation means, the command table control means and the electronic cam control means can be operated in synchronization with the reference shaft without delay.

### Brief Description of the Drawings

[Fig. 1] Fig. 1 is a diagram showing one embodiment of the invention and is a block diagram showing a configuration of a numerical control machine tool.
[Fig. 2] Fig. 2 is a diagram showing one embodiment of the invention and is a plan view showing a general machine configuration of the numerical control machine tool.
[Fig. 3] Fig. 3 is a diagram showing one embodiment of the invention, and Fig. 3 (a) is a diagram showing a kind of table, and Fig. 3(b) is a diagram showing the contents of an M table and an S table, and Fig. 3(c) is a diagram showing the contents of an S code command and an M code command.
[Fig. 4] Fig. 4 is a diagram showing one embodiment of the invention and is a flowchart showing the contents of interpreter processing.
[Fig. 5] Fig. 5 is a diagram showing one embodiment of the invention and is a flowchart showing the contents of electronic cam activation processing.
[Fig. 6] Fig. 6 is a diagram showing one embodiment of the invention and is a flowchart showing the contents of activation processing of a shaft control part.
[Fig. 7] Fig. 7 is a diagram showing one embodiment of the invention and is a flowchart showing the contents of activation processing of a command processing part.
[Fig. 8] Fig. 8 is a diagram showing one embodiment of the invention and is a flowchart showing the contents of command table processing.
[Fig. 9] Fig. 9 is a diagram showing one embodiment of the invention, and Fig. 9 (a) is a diagram showing an NC program example before conversion, and Fig. 9(b) is a diagram showing a program example after conventional conversion, and Fig. 9(c) is a diagram showing a program example after conversion of the case according to the embodiment.

### Description of Reference Numerals and Signs

- 1: NUMERICAL CONTROL MACHINE TOOL
- 13: CONTROL UNIT
- 51: CENTRAL PROCESSING UNIT
- 59: INTERPRETER PROCESSING PART
- 61: NC CODE STORAGE PART
- 63: CONVERSION PROCESSING PART
- 65: ELECTRONIC CAM PROCESSING PART
- 67: ELECTRONIC CAM DATA STORAGE PART
- 69: SHAFT CONTROL PART
- 71: COMMAND PROCESSING PART
- 73: SHAFT CONTROL TABLE
- 75: COMMAND TABLE

### Best Mode for Carrying Out the Invention

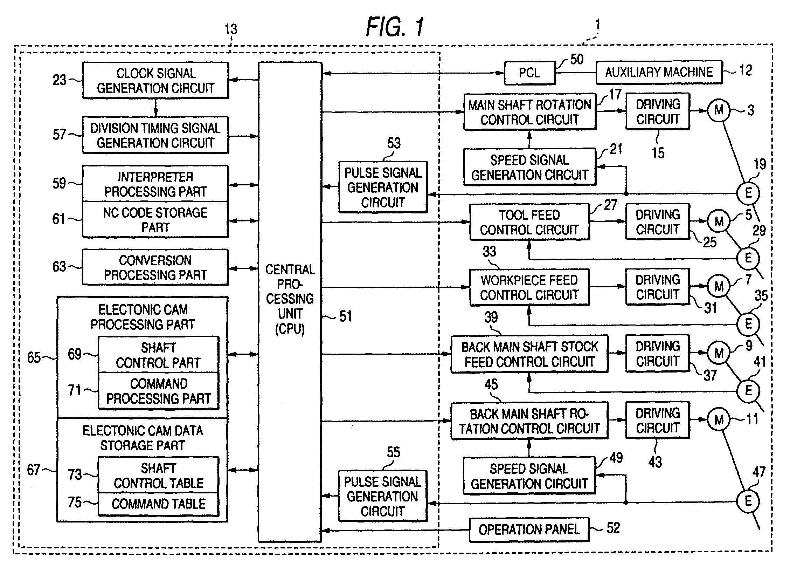

One embodiment of the invention will be described below with reference to Figs. 1 to 9.

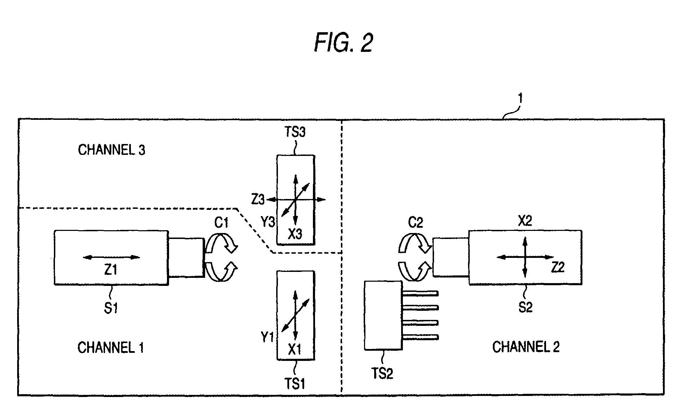

Fig. 1 is a block diagram showing the whole configuration of a numerical control machine tool according to the present embodiment and also, Fig. 2 is a plan view showing a general control shaft configuration of the numerical control machine tool.
In Fig. 1, a numerical control machine tool 1 has a motor 3 for main shaft rotation, a motor 5 for tool movement, a motor 7 for workpiece movement, a motor 9 for back main shaft movement, a motor 11 for back main shaft rotation, various auxiliary machines 12, and a control unit part 13 for controlling driving of these motor 3 for main shaft rotation, motor 5 for tool movement, motor 7 for workpiece movement, motor 9 for back main shaft movement, motor 11 for back main shaft rotation and auxiliary machines 12.

The motor 3 for main shaft rotation is means for rotating and driving a main shaft (shown by numeral S1 in Fig. 2) configured so that a workpiece can be held, and is connected to the control unit part 13 through a driving circuit 15 and a main shaft rotation control circuit 17, etc. Also, the motor 3 for main shaft rotation is provided with a pulse encoder 19 for detecting rotation of the motor 3 for main shaft rotation. An output of this pulse encoder 19 is connected to the control unit part 13 and a speed signal generation circuit 21, and a rotation detection signal outputted from the pulse encoder 19 is inputted to the control unit part 13 and the speed signal generation circuit 21. The pulse encoder 19 generates a rotation detection signal in synchronization with rotation of the motor 3 for main shaft rotation, and outputs the signal to the control unit part 13 and the speed signal generation circuit 21. The speed signal generation circuit 21 converts the rotation detection signal outputted from the pulse encoder 19 into a main shaft rotation speed signal indicating a rotation speed of the motor 3 for main shaft rotation. An output of the speed signal generation circuit 21 is connected to the main shaft rotation control circuit 17, and the converted main shaft rotation speed signal is inputted to the main shaft rotation control circuit 17.

The main shaft rotation control circuit 17 is means for controlling rotation of a workpiece (workpiece grasped by the main shaft S1) so as to become a desired rotation speed based on a clock signal generated and outputted by a clock signal generation circuit 23, and compares a main shaft rotation speed command signal outputted from the control unit part 13 with a main shaft rotation speed signal outputted from the speed signal generation circuit 21, and generates a control signal according to its difference based on the clock signal. The control signal generated by the main shaft rotation control circuit 17 is outputted to the driving circuit 15.

The driving circuit 15 controls electric power supplied to the motor 13 for main shaft rotation so that a rotation speed of the motor 3 for main shaft rotation (main shaft S1) becomes a main shaft rotation speed command value described below based on the control signal outputted from the main shaft rotation control circuit 17. These driving circuit 15, main shaft rotation control circuit 17 and speed signal generation circuit 21 construct a feedback control system of the rotation speed of the motor 3 for main shaft rotation (main shaft S1).

Next, the motor 5 for tool movement is means for moving a tool (for example, a turning tool for turning machining shown by numerals TS1, TS3 in Fig. 2) for machining a workpiece, for example, in a direction (X-axis direction, Y-axis direction) perpendicular to the rotation central axis of the motor 3 for main shaft rotation (main shaft S1) or a direction (Z-axis direction) parallel to the main shaft, and is connected to the control unit part 13 through a driving circuit 25 and a tool feed control circuit 27.
Incidentally, in the case of this embodiment, the tool TS1 is configured so as to be moved and controlled in an X1-axis direction and a Y1-axis direction and on the other hand, the tool TS3 is configured so as to be moved and controlled in X3-axis direction, a Y3-axis direction and a Z3-axis direction as shown in Fig. 2.

Also as the tool, a tool TS2 for back machining is disposed in addition to the tools TS1, TS3.
Also, the motor 5 for tool movement is provided with a pulse encoder 29 for detecting rotation of the motor 5 for tool movement. An output of this pulse encoder 29 is connected to the tool feed control circuit 27, and a rotation detection signal of the pulse encoder 29 is inputted to the tool feed control circuit 27. The pulse encoder 29 generates a rotation position signal every predetermined rotation angle of the motor 5 for tool movement, and outputs the signal to the tool feed control circuit 27.

The tool feed control circuit 27 recognizes a movement position of the actual tool TS1, TS3 based on the rotation position signal outputted from the pulse encoder 29 and also, compares the recognized movement position of the actual tool TS1, TS3 with a tool position command signal outputted from the control unit part 13 described below, and generates a tool driving signal based on this compared result. The tool driving signal generated by the tool feed control circuit 27 is outputted to the driving circuit 25. The driving circuit 25 controls electric power supplied to the motor 5 for tool movement based on the tool driving signal outputted from the tool feed control circuit 27. These driving circuit 25 and tool feed control circuit 27 construct a feedback control system of the movement position of the tool TS1, TS3.

Next, the motor 7 for workpiece movement is means for moving a workpiece, for example, in a direction (Z1-axis direction) parallel to the rotation central axis of the motor 3 for main shaft rotation (main shaft S1), and is connected to the control unit part 13 through a driving circuit 31 and a workpiece feed control circuit 33. Also, the motor 7 for workpiece movement is provided with a pulse encoder 35 for detecting rotation of the motor 7 for workpiece movement. An output of this pulse encoder 35 is connected to the workpiece feed control circuit 33, and a rotation detection signal of the pulse encoder 35 is inputted to the workpiece feed control circuit 33. The pulse encoder 35 generates a rotation detection signal every predetermined rotation angle of the motor 7 for workpiece movement, and outputs the signal to the workpiece feed control circuit 33.

The workpiece feed control circuit 33 recognizes a movement position of an actual workpiece based on the rotation detection signal outputted from the pulse encoder 35 and also, compares the recognized movement position of the actual workpiece with a workpiece position command signal outputted from the control unit part 13, and generates a workpiece driving signal based on this compared result. The workpiece driving signal generated every predetermined rotation angle is outputted to the driving circuit 31. The driving circuit 31 controls electric power supplied to the motor 7 for workpiece movement based on the workpiece driving signal outputted every predetermined rotation angle. These driving circuit 31 and workpiece feed control circuit 33 construct a feedback control system of the movement position of the workpiece.

Next, the motor 9 for back main shaft stock movement is means for moving a back main shaft S2, for example, in a direction (Z2-axis direction) parallel to the rotation central axis of the motor 3 for main shaft rotation (main shaft S1) or a direction (X2-axis direction) perpendicular to this, and is connected to the control unit part 13 through a driving circuit 37 and a back main shaft stock feed control circuit 39. Also, the motor 9 for back main shaft stock movement is provided with a pulse encoder 41 for detecting rotation of the motor 9 for back main shaft stock movement. An output of this pulse encoder 41 is connected to the back main shaft stock feed control circuit 39, and a rotation detection signal of the pulse encoder 41 is inputted to the back main shaft stock feed control circuit 39. The pulse encoder 41 generates a rotation position signal every predetermined rotation angle of the motor 9 for back main shaft stock movement, and outputs the signal to the back main shaft stock feed control circuit 39.

The back main shaft stock feed control circuit 39 recognizes a movement position of an actual back main shaft S2 based on the rotation position signal outputted from the pulse encoder 41 and also, compares the recognized movement position of the actual back main shaft S2 with a back main shaft stock position command signal outputted from the control unit part 13 described below, and generates a back main shaft stock driving signal based on this compared result. The back main shaft stock driving signal generated by the back main shaft stock feed control circuit 39 is outputted to the driving circuit 37. The driving circuit 37 controls electric power supplied to the motor 9 for back main shaft stock movement based on the driving signal outputted from the back main shaft stock feed control circuit 39. These driving circuit 37 and the back main shaft stock feed control circuit 39 construct a feedback control system of the movement position of a back main shaft stock.

Next, the motor 11 for back main shaft rotation is means for rotating and driving the back main shaft S2 in a direction of C2 configured so that a workpiece can be held, and is connected to the control unit part 13 through a driving circuit 43 and a back main shaft rotation control circuit 45, etc. Also, the motor 11 for back main shaft rotation is provided with a pulse encoder 47 for detecting rotation of the motor 11 for back main shaft rotation. An output of this pulse encoder 47 is connected to the control unit part 13 and a speed signal generation circuit 49, and a rotation detection signal outputted from the pulse encoder 47 is inputted to the control unit part 13 and the speed signal generation circuit 49. The pulse encoder 47 generates a rotation detection signal in synchronization with rotation of the motor 11 for back main shaft rotation (back main shaft S2), and outputs the signal to the control unit part 13 and the speed signal generation circuit 49. The speed signal generation circuit 49 converts the rotation detection signal outputted from the pulse encoder 47 into a back main shaft rotation speed signal indicating a rotation speed of the motor 11 for back main shaft rotation (back main shaft S2). An output of the speed signal generation circuit 49 is connected to the back main shaft rotation control circuit 45, and the converted back main shaft rotation speed signal is inputted to the back main shaft rotation control circuit 45.

The back main shaft rotation control circuit 45 is means for controlling rotation of a workpiece (back main shaft S2) so as to become a desired rotation speed based on a clock signal generated and outputted by the clock signal generation circuit 23, and compares a back main shaft rotation speed command signal outputted from the control unit part 13 with a back main shaft rotation speed signal outputted from the speed signal generation circuit 49, and generates a control signal according to its difference based on the clock signal. The control signal generated by the back main shaft rotation control circuit 45 is outputted to the driving circuit 43.

The driving circuit 43 controls electric power supplied to the motor 11 for back main shaft rotation so that a rotation speed of the motor 11 for back main shaft rotation (back main shaft S2) becomes a back main shaft rotation speed command value described below based on the control signal outputted from the back main shaft rotation control circuit 45. These driving circuit 43, back main shaft rotation control circuit 45 and speed signal generation circuit 45 construct a feedback control system of the rotation speed of the motor 11 for back main shaft rotation (back main shaft S2).

Also, the auxiliary machines 12 are connected to the control unit part 13 through a PLC (sequencer) 50, and configured so as to be controlled through the PLC 50. Also, an operation panel 52 is disposed.
In addition, as the auxiliary machines, for example, a coolant device etc. for supplying oil for cooling to a machining region are given as an example.

The control unit part 13 comprises a central processing unit (CPU) 51, pulse signal generation circuits 53, 55, the clock signal generation circuit 23 described already, a division timing signal generation circuit 57, an interpreter processing part 59, an NC code storage part 61, a conversion processing part (transformer) 63, an electronic cam processing part 65, an electronic cam data storage part 67, etc. as shown in Fig. 1. The electronic cam processing part 65 is provided with a shaft control part 69 and a command processing part 71. Also, the electronic cam data storage part 67 is provided with a shaft control table 73 and a command table 75.

The CPU 51 is a calculation part for administering signal processing etc. of the whole control unit part 13. The CPU 51 performs well-known multi-processing, that is, multi-processing. The multi-processing is processing configured so that multiple jobs (programs) are stored and these multiple programs are executed while switching in a short time and the multiple programs are simultaneously processed apparently, and means for performing time division processing or means etc. for performing task processing while priorities are assigned to each of the jobs and processing is switched in order of higher priority are known.

The pulse signal generation circuits 53, 55 are respectively connected to the pulse encoders 19, 47 and a rotation detection signal outputted from each of the pulse encoders 19, 47 is inputted to an interface (I/F) (not shown) etc. It is configured so as to generate a pulse signal every predetermined rotation angle based on this inputted rotation detection signal. Also, the pulse signal generation circuits 53, 55 are connected to the CPU 51 and are configured so as to output the pulse signal generated every predetermined rotation angle to the CPU 51. In the embodiment, the pulse signal generation circuits 53, 55 are configured so as to output the pulse signal at regular intervals in synchronization with the motor 3 for main shaft rotation (main shaft S1) or the motor 11 for back main shaft rotation (back main shaft S2) while the motor 3 for main shaft rotation (main shaft S1) or the motor 11 for back main shaft rotation (back main shaft S2) rotates one turn.

The clock signal generation circuit 23 is configured so as to receive a predetermined command signal outputted from the CPU 51 and generate and output a clock signal with a predetermined period, for example, 0.25 ms, and the clock signal generated by the clock signal generation circuit 23 is outputted to the division timing signal generation circuit 57. The division timing signal generation circuit 57 is configured so as to count the number of generations of the clock signal outputted from the clock signal generation circuit 23, and a division timing signal is generated and is outputted to the CPU 51 every time, for example, 1 ms has elapsed as a result of the count. Therefore, the division timing signal generation circuit 57 outputs a division timing signal with a period of 1 ms to the CPU 51 as an interrupt timing signal.
In addition, the periods of the clock signal and the division timing signal are not limited to the numeric values described above, and can be set properly in consideration of throughput of the CPU 51, resolutions of the pulse encoders 29, 35, 41, performance of each of the motors 3, 5, 7, 9, etc.

The interpreter processing part 59 is means for performing processing for interpreting and executing an NC code, and the NC code is stored in the NC code storage part 61. Also, the shaft control part 69 is means for controlling a control shaft according to information about the shaft control table 73. Also, data executed by the shaft control part 69 is stored in the shaft control table 73. Also, the command processing part 71 is means for commanding a code according to a command stored in the command table 75. Also, data executed by the command processing part 71 is stored in the command table 75.

Also, the conversion processing part 63 is means for performing processing for converting an NC code into electronic cam data, and an NC code for electronic cam activation is created in the NC code storage part 61. Also, the shaft control table 73 and the command table 75 are stored in the electronic cam data storage part 67.

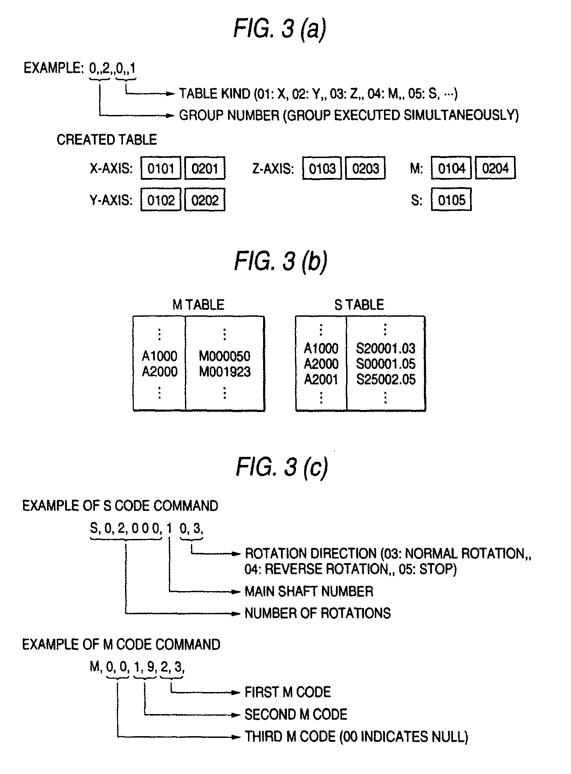

Tables stored in the shaft control table 73 and the command table 75 will be described herein. First, numbers respectively indicating "group numbers" and "table kinds" are assigned to the tables and classification is made as shown in Fig. 3 (a). The group numbers indicate a group simultaneously executed, and specifically, there are a group of "01" and a group of "02", and tables to which the group number "01" is assigned are simultaneously executed. Similarly, tables to which the group number "02" is assigned are simultaneously executed. Also, the table kinds indicate purposes of use of tables, and indicate "X" for "01", "Y" for "02", "Z" for "03", "M" for "04" and "S" for "05".
In addition, an example of created tables is shown in the lower portion of Fig. 3(a).

Also, when tables of numbers as shown in Fig. 3 (a) are created, tables used every "electronic cam call" are as follows.
"Electronic cam call (1)"
Table used: 0101, 0102, 0103, 0104, 0105
"Electronic cam call (2)"
Table used: 0201, 0202, 0203, 0204
Then, at the time of an electronic cam call, based on a table kind and a group number specified, a table is identified and is processed according to a predetermined procedure.

Also, combinations of a position of a reference shaft and a position to exist at that time are stored in the shaft control table 73.
Also, commands are stored in the command table 75 in, for example, a form as shown in Fig. 3(b).
For example, referring to a place of an M table, a numeric value showing a position of a reference shaft is put in the left field of the table and also, a command to be commanded at that time is written in the right field of the table. This similarly applies to an S table, and a numeric value showing a position of a reference shaft is put in the left field of the table and also, a command to be commanded at that time is written in the right field of the table.
A command equivalent to an M code and a command equivalent to an S code set in the M table and the S table shown in Fig. 3(b) are set in the tables by the following concept of the reference shaft.
In an NC program before conversion, time necessary for the case of executing a movement command, a tool selection command, an M command, an S command, etc. described in each block of the NC program is calculated every block as the previous reference. This is done by providing the transformer 63 with a module for computing time necessary for the case of executing the commands described in the block and calculating execution time by this module. When this execution time is calculated, time necessary for processing of the commands described in each block is associated with each block and is stored in a storage location specified in the transformer 63.
By storing the time necessary for execution of each block thus, accumulated time necessary to execute the commands described in the particular block can be calculated. This accumulated time can be converted into a reference shaft value to obtain start timing of command execution as the reference shaft value.
In correspondence with the reference shaft value as the start timing of the command execution obtained thus, the commands equivalent to the M and S codes described in the blocks of the NC program are set in the command table 75. Each of the commands can be executed in proper order without disordering the order specified in the original NC program.

Next, an example of actual commands is shown in Fig. 3(c). For example, referring to an example of an S code command, the first five numeric characters "02000" show the number of rotations. The next numeric character "1" shows a main shaft number. That is, "1" is the main shaft S1 shown in Fig. 2 and "2" indicates the back main shaft S2 shown in Fig. 2. Then, the final two numeric characters "03" show a rotation direction. That is, "03" is normal rotation, and "04" is reverse rotation, and "05" is a stop.
Also, referring to an example of an M code command, the first "00" indicates the third M code, and the next "19" indicates the second M code, and the final "23" indicates the first M code.
Correspondence with the M codes specified in the NC program of the conversion source is represented by these two-digit numeric characters. For example, it is "19"=M19, "23"=M23, etc.

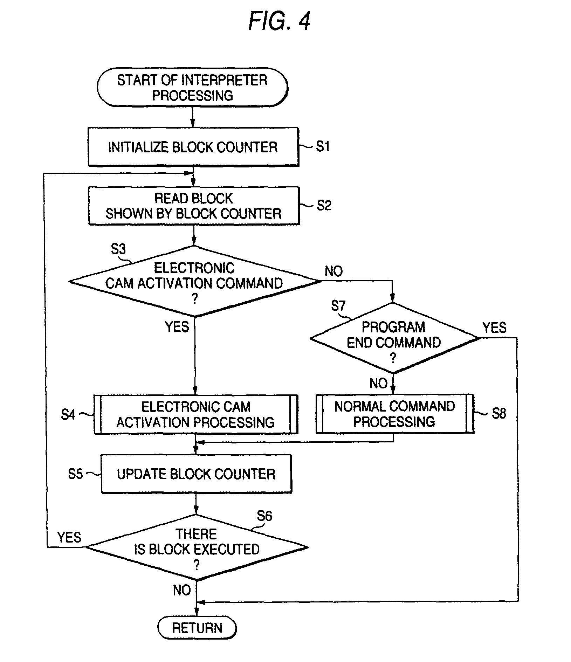

The action will be described based on the above configuration.
First, interpreter processing by the interpreter processing part 59 will be described with reference to Fig. 4.
Incidentally, the processing by the interpreter processing part 59 is started by an operation etc. of a cycle start button (not shown).
In step S1, a block counter is initialized, that is, is set at "0". Next, the processing proceeds to step S2 and a block shown by the block counter is read. Then, the processing proceeds to step S3 and it is determined whether or not the read block is an electronic cam activation command. In the case of determining that the block is the electronic cam activation command as a result of the determination, the processing proceeds to step S4 and a group number of a table executed is specified and electronic cam activation processing is executed. Then, the processing proceeds to step S5 and the block counter is updated. Then, the processing proceeds to step S6 and it is determined whether or not there is a block executed. In the case of determining that there is the block executed, the processing returns to step S2 and similar processing is repeated. In the case of determining that there is not the block executed, the processing returns.

In the case of determining that the block is not the electronic cam activation command in step S3, the processing proceeds to step S7. In this step S7, it is determined whether or not it is a program end command. In the case of determining that it is the program end command, the processing returns as it is. In the case of determining that it is not the program end command, the processing proceeds to step S8 and normal command processing is executed. Then, the steps S5, S6 already described are executed sequentially.

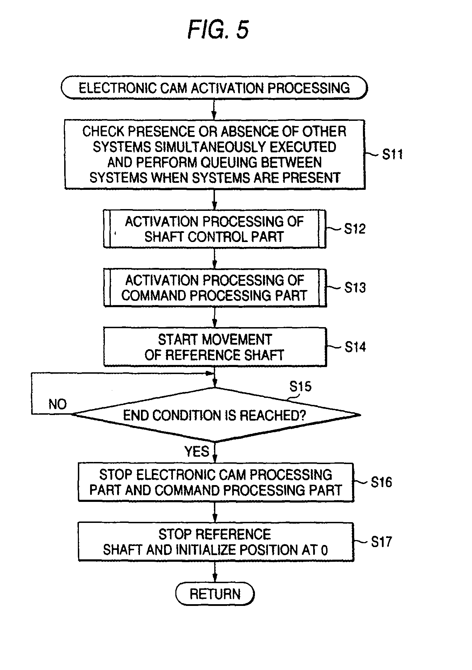

Next, the electronic cam activation processing of step S4 will be described in detail with reference to Fig. 5. First, in step S11, the presence or absence of other systems simultaneously executed is checked and when the systems simultaneously executed are present, queuing between the systems is performed. Next, the processing proceeds to step S12 and a group number of a table specified is called as an argument and activation processing of a shaft control part is performed. Then, the processing proceeds to step S13 and activation processing of a command processing part is executed. Then, the processing proceeds to step S14 and movement of a reference shaft is started.
In addition, the CPU 51 shall execute respective tasks of the shaft control part 69 and the command processing part 71 herein as separate tasks. By separately executing respective processing, stable processing can be performed. By the heretofore processing, electronic cam operations about all the tables are started at once. Then, the processing proceeds to step S15 and it is determined whether or not an end condition is reached.

In the case of determining that the end condition is reached in the determination, the processing proceeds to step S16 and the electronic cam processing part 65 (shaft control part 69 and command processing part 71) are stopped. Then, the processing proceeds to step S17 and the reference shaft is stopped and the position is initialized at "0".

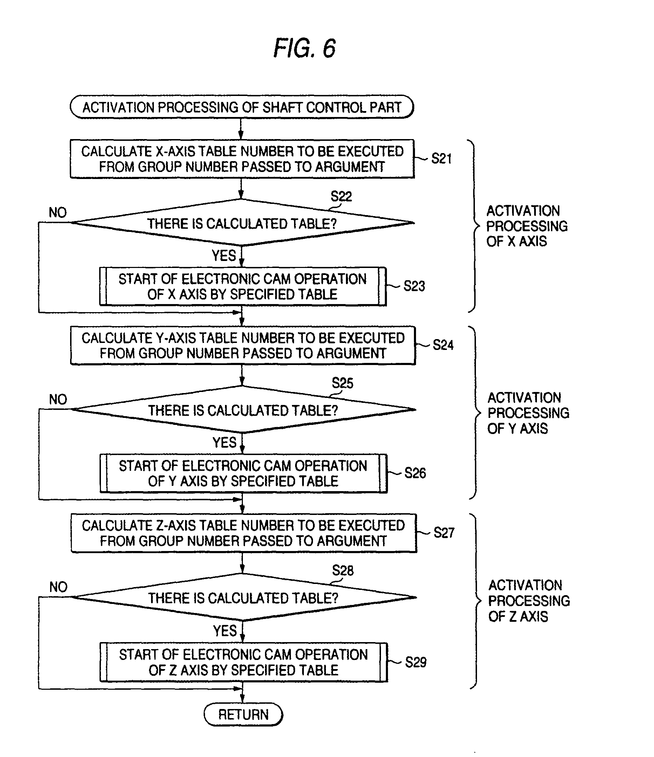

Next, the activation processing of the shaft control part in step S12 will be described with reference to Fig. 6. First, in step S21, an X-axis table number to be executed is calculated from a group number passed to an argument. Next, the processing proceeds to step S22 and it is determined whether or not there is a calculated table. In the case of determining that there is the calculated table, the processing proceeds to step S23. In this step S23, an electronic cam operation of the X axis by a specified table is started. Then, the processing proceeds to step S24 and a Y-axis table number to be executed is calculated from a group number passed to an argument. In the case of determining that there is not the calculated table in step S22, step S23 is bypassed and the processing proceeds to step S24.

Then, the processing proceeds to step S25 and it is determined whether or not there is a calculated table. In the case of determining that there is the calculated table, the processing proceeds to step S26. In this step S26, an electronic cam operation of the Y axis by a specified table is started. Then, the processing proceeds to step S27 and a Z-axis table number to be executed is calculated from a group number passed to an argument. In the case of determining that there is not the calculated table in step S25, step S26 is bypassed and the processing proceeds to step S27.

Then, the processing proceeds to step S28 and it is determined whether or not there is a calculated table. In the case of determining that there is the calculated table, the processing proceeds to step S29. In this step S29, an electronic cam operation of the Z axis by a specified table is started. Then, the processing returns. In the case of determining that there is not the calculated table in step S28, step S29 is bypassed and the processing returns.

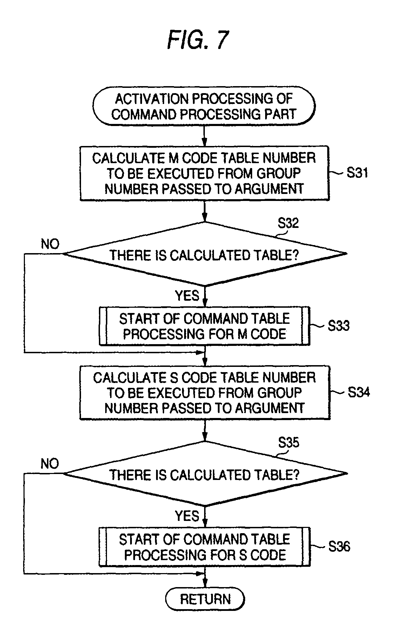

Next, the execution processing of the command processing part in step S13 will be described with reference to Fig. 7. First, in step S31, an M code table number to be executed is calculated from a group number passed to an argument. Next, the processing proceeds to step S32. In this step S32, it is determined whether or not there is a calculated table. In the case of determining that there is the calculated table, the processing proceeds to step S33. In this step S33, command table processing for M code is started. Then, the processing proceeds to step S34 and an S code table number to be executed is calculated from a group number passed to an argument. In the case of determining that there is not the calculated table in step S32, step S33 is bypassed and the processing proceeds to step S34.

Then, the processing proceeds to step S35. In this step S35, it is determined whether or not there is a calculated table. In the case of determining that there is the calculated table, the processing proceeds to step S36. In this step S36, command table processing for S code is started. Then, the processing returns. In the case of determining that there is not the calculated table in step S35, step S36 is bypassed and the processing returns.

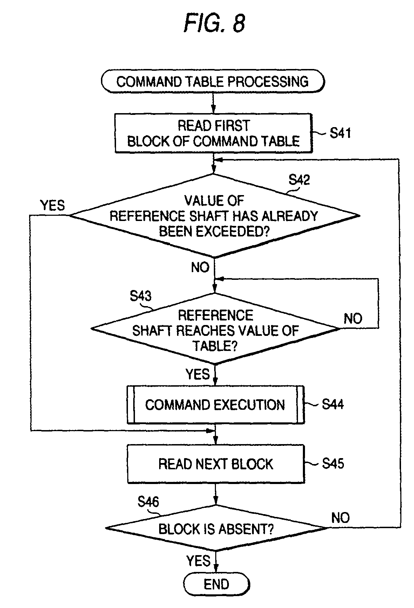

Next, command table processing, that is, the command table processing of step S33 and step S36 shown in Fig. 7 will be described with reference to Fig. 8. First, in step S41, the first block of a command table is read. Next, the processing proceeds to step S42 and it is determined whether or not a value of a reference shaft has already been exceeded. In the case of determining that the value of the reference shaft has already been exceeded, the processing proceeds to step S43. In this step S43, it is determined whether or not the reference shaft reaches a value of the table. Then, the processing proceeds to step S44 and a command is executed. In this case, an M code is outputted for an M code table and an S code is outputted for an S code table. Then, the processing proceeds to step S45 and the next block is read. In the case of determining that the value of the reference shaft has not been exceeded in step S42, steps S43 and S44 are bypassed and the processing proceeds to step S45. By comparing the value of the reference shaft with a reference shaft value in which a command described in the command table is executed thus, in the case of reactivating the command table after block skip processing is executed, execution of a command in which the reference shaft value has already been exceeded can be skipped to execute a command in correspondence with the reference shaft value at the present point in time.

Then, the processing proceeds to step S46 and it is determined whether or not a block is present, and when the block is absent, the processing ends and when the block is present, the processing returns to step S42 and similar processing is repeated.

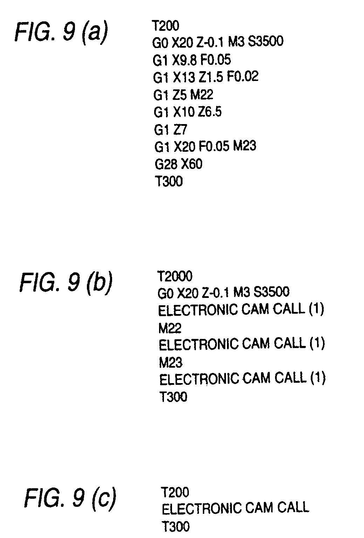

Next, an actual conversion example will be described.
For example, an NC code as shown in Fig. 9 (a) is given as an example. M codes are put in plural places therein. That is, the M codes are "M3" of the second line from the top, "M22" of the fifth line from the top and "M23" of the eighth line from the top. When the M codes are converted by a conventional method, a result as shown in Fig. 9 (b) is obtained. In other words, electronic cam control cannot be performed with respect to portions of the M codes "M3", "M22" and "M23", so that it is necessary to switch to control by an NC code and thereafter, an electronic cam is called (electronic cam calls (1), (2), (3)). On the other hand, when the M codes are converted by the embodiment, a result as shown in Fig. 9(c) is obtained and electronic cam control can also be performed with respect to portions of the M codes "M3", "M22" and "M23".

The following effects can be obtained according to the embodiment as described above.
First, it is configured so that a control shaft is controlled by the shaft control part 69 of the electronic cam processing part 65 and in addition, processing in which an S code command or an M code command is to be executed by the command processing part 71 of the electronic cam processing part 65 can also be executed by electronic cam control, so that the number of switchings between NC control and electronic cam control is significantly decreased and thereby, time necessary for machining could be reduced.
Also, the contents of an S code or an M code conventionally executed by an NC program can be performed by an electronic cam program, so that a ratio of conversion from the NC program into the electronic cam program is also increased and thereby machining efficiency can be improved.
Also, electronic cam control and command processing control are executed based on a common reference shaft, so that both the controls are executed in synchronization and a deviation of timing of command processing, interference between respective operations based on both the controls, etc. can be prevented effectively.
Also, since it is configured so that time division processing of processing by the shaft control part 69 and processing by the command processing part 71 is respectively performed in the common CPU 51, it becomes unnecessary to examine a correlation with data used in another table data in the case of creating data of the shaft control table 73 and the command table 75, so that creation of the table data is facilitated. Also, a situation in which electronic cam control becomes unstable due to the influence of command processing can be prevented by individually executing each of the processing.
Also, it is configured so as to start an operation of a reference shaft after processing by the shaft control part 69 and processing by the command processing part 71 as shown in steps S12, S13, S14 of Fig. 5, so that both the processing can be operated in synchronization with the reference shaft without delay.

In addition, the invention is not limited to the embodiment and, for example, the machine configuration illustrated is only one example and other machines of various configurations are contemplated.

### Industrial Applicability

The invention provides a numerical control apparatus of a machine tool and a numerical control method of a machine tool capable of achieving reduction in machining time by eliminating a situation in which electronic cam data is cut off before and after an "M code" or an "S code" and increasing a conversion ratio of the case of converting an NC program into an electronic cam program and improving working efficiency. It is configured so that a control shaft is controlled by electronic cam control means and in addition, processing in which an S code command or an M code command is to be executed by reference shaft operation control means, a data table for command processing execution and command table control means can also be executed by electronic cam control, so that the number of switchings between NC control and electronic cam control is significantly decreased and thereby, time necessary for machining can be significantly reduced.

## Claims

1. A numerical control apparatus of a machine tool for holding a workpiece in a main shaft and also moving at least one of the workpiece and a tool by which the workpiece is machined and machining the workpiece in a desired shape, the numerical control apparatus comprising:
an electronic cam control means for controlling a control shaft by an electronic cam;
a reference shaft operation control means for controlling an operation of a reference shaft in the case of executing the electronic cam control means;
a data table for command processing execution configured so as to describe a command equivalent to an S code or an M code to be executed in correspondence with the reference shaft in order to execute a function equivalent to an S code or an M code in synchronization with the reference shaft operated by control through the reference shaft operation control means; and
a command table control means for performing command processing control based on the reference shaft and the data table for command processing execution.

2. The numerical control apparatus of a machine tool according to claim 1, further comprising a time division processing means configured so that time division processing of processing executed by the electronic cam control means and processing executed by the command table control means is respectively performed in a common CPU.

3. The numerical control apparatus of a machine tool according to claim 1, further comprising a previous activation means for previously activating the electronic cam control means and the command table control means,
wherein the reference shaft operation control means is means for performing control so as to start an operation of a reference shaft after both of the electronic cam control means and the command table control means are previously activated by the previous activation means.

4. A method for numerically controlling a machine tool, the method comprising:
a step of determining whether or not a block read by starting processing is an electronic cam activation command; and
a step of executing electronic cam activation processing in the case of determining that the block is the electronic cam activation command by the step,
wherein the step of executing the electronic cam activation processing comprises a step of performing activation processing of a shaft control part and a step of performing activation processing of a command processing part.

5. The method according to claim 4, wherein the step of executing the electronic cam activation processing executes a step of moving a reference shaft after a step of performing activation processing of a shaft control part and a step of performing activation processing of a command processing part are ended.
